# EUROPÄISCHE PATENTANMELDUNG

(11) **EP 1 956 239 A1**
(43) Veröffentlichungstag der Anmeldung: **13.08.2008**
(21) Anmeldenummer: 07090019.6
(22) Anmeldetag: 12.02.2007
(51) Int. Cl.: F03G 7/04

(54) **Erdwärmesonde und Verfahren zum Betreiben einer Erdwärmesonde**

(71) Anmelder: Gundermann, Alf, 04129 Leipzig (DE)
(72) Erfinder: Gundermann, Alf, 04129 Leipzig (DE)
(74) Vertreter: Theobald, Andreas

(57) **Zusammenfassung**

Es wird eine von der Erdoberfläche aus in ein Bohrloch zu versenkende Erdwärmesonde (1) mit einem im Bereich der Erdoberfläche (5) anzuordnenden oberen Ende (7) und einem in das Bohrloch zu versenkenden unteren Ende (3) zur Verfügung gestellt. Die Erdwärmesonde (1) umfasst:
- einen Verdampfungsraum (9), welcher zumindest im Bereich des unteren Endes der Erdwärmesonde (1) vorhanden ist,
- wenigstens eine Fluidleitung (13), welche vom oberen Ende aus zugänglich ist, sich bis zum Verdampfungsraum (9) erstreckt und über wenigstens eine Fluidaustrittsöffnung (15) in den Verdampfungsraum (9) mündet, und
- wenigstens einen Steigraum (11), welcher vom Verdampfungsraum (9) ausgehend zum oberen Ende führt und einem über die wenigstens eine Fluidleitung (13) in den Verdampfungsraum (9) eingebrachten und dort verdampften Fluid den Aufstieg zum oberen Ende (7) ermöglicht.

Der Verdampfungsraum (9) umgibt die Fluidleitung (13).

## Beschreibung

Die vorliegende Erfindung betrifft eine von der Erdoberfläche aus in ein Bohrloch zu versenkende Erdwärmesonde. Daneben betrifft die Erfindung ein Verfahren zum Betreiben einer Erdwärmesonde.

Der zunehmende Energiebedarf in den Industriestaaten und Schwellenländern macht es erforderlich, bei der Energiegewinnung sowie bei der Gewinnung von Wärme neue Wege zu beschreiten und insbesondere den Anteil an umweltverträglicher Energie- und Wärmegewinnung zu erhöhen. Dabei sind beispielsweise die Gewinnung von Wärme und Energie aus Sonnenlicht oder Windkraft zu nennen. Neben der Gewinnung von Energie und Wärme aus Sonnenlicht oder Windkraft wird auch die Gewinnung von Energie und Wärme aus Erdwärme zunehmend in Betracht gezogen.

Die Energie- und Wärmegewinnung aus geothermischen Vorkommen ist weltweit grundsätzlich an jedem Punkt der Erde möglich.

Eine Geothermieanlage zum Heizen und Klimatisieren ist beispielsweise im Dresdener Transferbrief 1.05, 13. Jahrgang, Seite 18 beschrieben. Die Anlage arbeitet im sogenannten Direktverdampfer-Verfahren, in dem ein Kältemittel, etwa Ammoniak, Propan, Butan oder Kohlendioxid bei gesteuertem Innendruck als flüssiges Kältemittel in ein Stahlrohr, welches in ein Bohrloch eingeführt ist, injiziert wird. Aufgrund der Erdwärme am Grund der Bohrung verdampft das Kältemittel und entzieht dabei dem umgebenen Erdreich Wärme. Das verdampfte Kältemittel steigt im Zentrum des Rohres auf und wird über der Erde einer Wärmepumpe zugeführt, welche ihm die Wärme entzieht. Durch den Entzug der Wärme kondensiert das Kältemittel wieder. Es wird dann im kondensierten Zustand wieder in das Stahlrohr injiziert, so dass ein Kreislauf entsteht.

Eine Vorrichtung zur Nutzung von Erdwärme mit einer komplexer aufgebauten Erdwärmesonde ist in EP 1 194 723 beschrieben. Die Erdwärmesonde umfasst ein Innenrohr, durch welches verdampftes Kältemittel aufsteigen kann und einen um das Innenrohr herum angeordneten Kanal, durch den flüssiges Kältemittel dem unteren Bereich der Erdwärmesonde zugeführt werden kann. Im Kanal ist ein Drosselbereich mit drei in Strömungsrichtung hintereinander geschalteten Drosselstellen vorhanden. Diese sind jeweils von einem in einem Flansch befestigten Rohr gebildet. Die Drosselstellen dienen dazu, den Flüssigkeitsdruck in der Tiefe auf einem Verdampfungsdruck von ca. 60 bar zu drosseln. Die letzte Drosselstelle stellt gleichzeitig die Austrittsöffnung für den Austritt der Flüssigkeit in den Verdampfungsraum dar.

Demgegenüber ist es Aufgabe der vorliegenden Erfindung, eine vorteilhafte Konstruktion für eine Erdwärmesonde zur Verfügung zu stellen. Eine weitere Aufgabe der vorliegenden Erfindung ist es, ein vorteilhaftes Verfahren zum Betreiben einer Erdwärmesonde zur Verfügung zu stellen. Diese Aufgaben werden durch eine Erdwärmesonde nach Anspruch 1 bzw. ein Verfahren nach Anspruch 16 gelöst. Die abhängigen Ansprüche enthalten vorteilhafte Ausgestaltungen der Erfindung.

Eine erfindungsgemäße Erdwärmesonde ist von der Erdoberfläche aus in ein Bohrloch zu versenken und weist ein im Bereich der Erdoberfläche anzuordnendes oberes Ende sowie ein in das Bohrloch zu versenkendes unteres Ende auf. Die Erdwärmesonde umfasst einen Verdampfungsraum, welcher zumindest im Bereich des unteren Endes der Erdwärmesonde vorhanden ist und sich bis in den mittleren Bereich der Erdwärmesonde oder sogar darüber hinaus erstrecken kann. Eine Fluidleitung, welche vom oberen Ende aus zugänglich ist, erstreckt sich bis zum Verdampfungsraum und mündet über wenigstens eine Austrittsöffnung in diesen ein. Wenigstens ein Steigraum geht vom Verdampfungsraum aus und führt zum oberen Ende. Der Steigraum ermöglicht einem über die wenigstens eine Fluidleitung in den Verdampfungsraum eingebrachten und dort verdampften Fluid den Aufstieg zum oberen Ende der Erdwärmesonde. In der erfindungsgemäßen Erdwärmesonde umgibt der Verdampfungsraum die Fluidleitung. Außerdem kann auch der Steigraum die Fluidleitung umgeben. Insbesondere ist es möglich, dass der Verdampfungsraum und ggf. der Steigraum die Fluidleitung über ihren gesamten Umfang umgibt bzw. umgeben.

Dadurch, dass der Verdampfungsraum die Fluidleitung umgibt, ist es möglich, den Verdampfungsraum unmittelbar an das Erdreich, dem die Wärme entzogen werden soll, angrenzen zu lassen und gleichzeitig Fluid bis in den untersten Bereich der Erdwärmesonde, welcher in der Regel den untersten Bereich des Verdampfungsraums darstellt, zuzuführen. Auf diese Weise kann der Verdampfungsraum besonders effektiv zum Verdampfenlassen des Fluids genutzt werden.

Die genannte Ausgestaltung kann dadurch konkretisiert werden, dass die Fluidleitung beispielsweise in Form eines Fluidrohres, konzentrisch im Verdampfungsraum und ggf. im Steigraum angeordnet ist.

In einer vorteilhaften Ausgestaltung der erfindungsgemäßen Erdwärmesonde ist die Umfangswand der Fluidleitung mit Fluidaustrittsöffnungen versehen. Das Fluid tritt dann in Richtung auf die Wand des Verdampfungsraums aus der Fluidleitung aus. Wenn die Abmessungen der Austrittsöffnungen in Abhängigkeit von der Tiefe gewählt sind, in der sie sich nach dem Einbringen der Erdwärmesonde in das Bohrloch befinden, kann erreicht werden, dass durch alle Austrittsöffnungen die gleiche Menge an Fluid in den Verdampfungsraum eintritt. Wenn alle Austrittsöffnungen gleich groß wären, würde aufgrund des höheren Drucks in größeren Tiefen aus den tiefer gelegenen Austrittsöffnungen mehr Fluid in den Verdampfungsraum austreten als bei höhergelegenen Austrittsöffnungen. Wenn nun die tiefer gelegenen Austrittsöffnungen kleiner sind als die höher gelegenen Austrittsöffnungen, kann die Menge an austretenden Fluid aneinander angeglichen werden. Selbstverständlich ist es aber auch möglich, in unterschiedlichen Tiefen des Verdampfungsraumes unterschiedliche Mengen an Fluid in den Verdampfungsraum eintreten zu lassen.

Insbesondere wenn die Austrittsöffnungen kleine Durchmesser besitzen, führt der in der Fluidleitung herrschende Druck dazu, dass das Fluid in den Verdampfungsraum eingesprüht wird. Die dabei auftretende Zerstäubung des Fluids erleichtert das Verdampfen des Fluids im Verdampfungsraum. Wenn der Fluiddruck in der Fluidleitung hoch genug ist, lässt sich zudem erreichen, dass das in den Verdampfungsraum eingesprühte Fluid die an das Erdreich angrenzende Außenwand des Verdampfungsraumes erreicht und diese benetzt. Der unmittelbare Kontakt des Wärmefluids mit der Außenwand ermöglicht eine besonders effektive Übertragung der Wärme des Erdreiches auf das Wärmefluid. Durch das Sprühen, d.h. das Zerstäuben des Wärmefluids in den Verdampfungsraum, kann die Leistung der Erdwärmesonde also durch zwei Effekte erhöht werden, nämlich einerseits durch die Zerstäubung selbst, die zu kleinen, leicht verdampfenden Tröpfchen führt, und zum anderen durch das Benetzen der Außenwand des Verdampfungsraumes.

Vorteilhafterweise umfasst die erfindungsgemäße Erdwärmesonde eine Vorrichtung zum Einstellen des Fluiddruckes, der in der Fluidleitung herrscht. Die Abmessungen der Fluidaustrittsöffnungen in der Fluidleitung können dabei insbesondere im Hinblick auf die einstellbaren Fluiddrücke in der Fluidleitung so gewählt sein, dass das Einsprühen des Fluids in den Verdampfungsraum ggf. bis zur umgebenden Wand des Verdampfungsraumes durch Einstellen eines geeigneten Fluiddruckes möglich ist.

Das Vorhandensein der Vorrichtung zum Einstellen des in der Fluidleitung herrschenden Fluiddruckes bietet den Vorteil, die Leistung der Erdwärmesonde durch Steuern des Druckaufbaus in der Fluidleitung steuern zu können. Im Unterschied zur Erdwärmesonde mit einer Einrichtung zum Einstellen des Fluiddrucks erfolgt die Zufuhr des Fluids in den Erwärmesonden nach Stand der Technik alleine durch die Schwerkraft. Ein Steuern des Zuführens des Fluids in den Verdampfungsraum ist daher im Stand der Technik nicht möglich. Typische Drücke, die im Bereich der Fluidaustrittsöffnungen der Fluidleitung herrschen, liegen im Bereich bis 20 bar. In diesem Bereich ist der Druckaufbau mittels der Vorrichtung zum Einstellen des in der Fluidleitung herrschenden Fluiddruckes vorzugsweise variierbar.

In einer weiteren vorteilhaften Ausgestaltung der erfindungsgemäßen Erdwärmesonde weist der Verdampfungsraum eine Außenwand mit daran angeordneten Temperaturfühlern auf. Mittels der Temperaturfühler ist es möglich, festzustellen, ob die Außenwand bzw. Umfangswand des Verdampfungsraums benetzt ist, oder nicht. Da das in den Verdampfungsraum eingespritzte Fluid eine deutlich niedrigere Temperatur als das umgebende Erdreich und damit eine niedrigere Temperatur als die unbenetzte Außenwand des Verdampfungsraumes aufweist, ermöglicht eine Temperaturmessung das Feststellen, ob die Außenwand benetzt ist. Wenn die Temperatur hoch ist, so bedeutet dies, dass keine Benetzung vorliegt. Bei Messung einer niedrigen Temperatur kann diese Temperatur nur durch das kühle Fluid verursacht sein. In diesem Fall liegt eine Benetzung der Außenwand vor. Im Unterschied dazu ist es bei den Erdwärmesonden im Stand der Technik nicht möglich, festzustellen, ob und wie weit die Außenwand des Verdampfungsraums benetzt ist.

Zusammen mit der Vorrichtung zum Einstellen des Fluiddruckes in der Fluidleitung ermöglicht es der wenigstens ein Temperaturfühler einen Regelkreis aufzubauen, mit dessen Hilfe sich die Benetzung der Außenwand des Verdampfungsraumes in einem Sollbereich halten lässt.

Für das Feststellen eine Benutzung der Außenwand ist es vorteilhaft, wenn bei in Axialrichtung der Fluidleitung verteilten Austrittsöffnungen jeder Axialposition, in der sich Austrittsöffnungen befinden, wenigstens ein Temperaturfühler zugeordnet ist. Dies ermöglicht es, festzustellen, in welchen Tiefenabschnitten des Verdampfungsraumes seine Außenwand benetzt ist. Vorteilhafterweise sind die zugeordneten Temperaturfühler jeweils unterhalb der Axialposition der Austrittsöffnungen, denen sie zugeordnet sind, angeordnet, wenn die Erdwärmesonde in das Erdreich eingebracht ist.

Die vom Verdampfungsraum und ggf. vom Steigraum umgebene Fluidleitung kann mittels Stützstreben, welche zwischen der Wand des Verdampfungsraumes und ggf. des Steigraumes einerseits sowie der Fluidleitung andererseits vorhanden sind, in Position gehalten werden. An diesen Stützstreben können auch die Temperaturfühler fixiert sein.

Erfindungsgemäß wird außerdem ein Verfahren zum Betreiben einer Erdwärmesonde mit einem im Bereich der Erdoberfläche anzuordnenden oberen Ende, einem in das Bohrloch versenkenden unteren Ende zur Verfügung gestellt. Diese ist ausgestattet mit einem Verdampfungsraum, welcher zumindest im Bereich des unteren Endes der Erdwärmesonde vorhanden ist, wenigstens einer Fluidleitung, welche vom oberen Ende aus zugänglich ist, sich bis zum Verdampfungsraum erstreckt und in den Verdampfungsraum mündet, sowie wenigstens einem Steigraum, welcher von Verdampfungsraum ausgehend zum oberen Ende führt. Im erfindungsgemäßen Verfahren wird über die wenigstens eine Fluidleitung ein Fluid im flüssigen Zustand in den Verdampfungsraum eingebracht und dort verdampft. Der Steigraum ermöglicht dem verdampften Fluid den Aufstieg zum oberen Ende der Erdwärmesonde. Der Betrieb erfolgt so, dass der Druck im verdampften Fluid zwischen einem hohen Druckwert und einem niedrigen Druckwert pulsiert.

Ein pulsierender Betrieb der Erdwärmesonde kann im Hinblick auf spezielle Anwendungen einer Erdwärmesonde vorteilhaft sein. Insbesondere die erfindungsgemäße Erdwärmesonde kann gemäß dem erfindungsgemäßen Verfahren betreiben werden.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Fig. 1: zeigt ein Ausführungsbeispiel für die erfindungsgemäße Erdwärmesonde in einem Längsschnitt.
- Fig. 2: zeigt das Ausführungsbeispiel aus Fig. 1 in einem Querschnitt im Bereich des Verdampfungsraums.

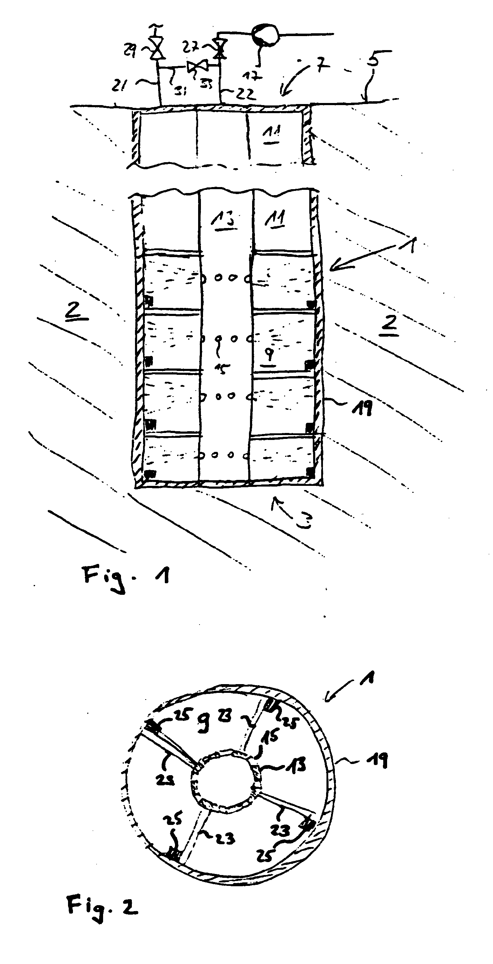

Mit Bezug auf die Fig. 1 und 2 wird nachfolgend ein Ausführungsbeispiel für die erfindungsgemäße Erdwärmesonde beschrieben. Fig. 1 zeigt eine erfindungsgemäße Erdwärmesonde 1 nach dem Einbringen in ein Bohrloch im Erdreich 2 in einem Längsschnitt. Das am unteren Ende des Bohrlochs befindliche Ende 3 der Erdwärmesonde 1 wird nachfolgend als unteres Ende bezeichnet, das im Bereich der Erdoberfläche 5 gelegene Ende 7 als oberes Ende.

Die Erdwärmesonde 1 umfasst einen Verdampfungsraum 9, welcher sich im Bereich des unteren Endes 3 der Erdwärmesonde 1 befindet, einen sich zum oberen Bereich 7 der Erdwärmesonde 1 hin an den Verdampfungsraum 9 anschließenden Steigraum 11 sowie ein Fluidrohr 13, welches als Fluidleitung zum Zuführen eines Fluids in den Verdampfungsraum 9 dient. Das Fluidrohr 13 ist zentrisch durch den Steigraum 11 und den Verdampfungsraum 9 hindurchgeführt und erstreckt sich bis zum unteren Ende 3 der Erdwärmesonde 1. In demjenigen Abschnitt des Fluidrohrs 13, welcher sich im Verdampfungsraum 9 befindet, sind Düsenöffnungen 15 im Mantel des Fluidrohres 13 vorhanden, welche das Einsprühen von flüssigem Fluid aus dem Fluidrohr 13 in den Verdampfungsraum 9 ermöglichen. Die Düsenöffnungen 15 ermöglichen das Zerstäuben von flüssigem Fluid beim Einbringen in den Verdampfungsraum 9. Das Zerstäuben schafft dabei kleine Flüssigkeitströpfchen, die im Verdampfungsraum 9 leicht verdampfen können.

Als Fluid können im vorliegenden Ausführungsbeispiel insbesondere Ammoniak (NH₃), Propan (C₃H₈) oder Kohlendioxid (CO₂) zur Anwendung kommen. Es sind aber auch Gemische dieser Stoffe möglich. Zwar bietet von diesen Stoffen Ammoniak die höchste Energieleistung, jedoch kann Ammoniak nicht zusammen ohne Weiteres mit allen Materialien der Erdwärmesonde Verwendung finden, das Ammoniak bei manchen Materialien durch die Wand des Rohres diffundieren kann. Weniger problematisch ist die Diffusion bei Verwendung von Propan, das ca. 50 % der Energieleistung, die mit Ammoniak möglich ist, erreicht. Kohlendioxid, welches ebenfalls weniger problematisch als Ammoniak ist und zudem in großen Mengen als Abgas anfällt, weist etwa ein Drittel der mit Propan möglichen Energieleistung auf.

Dem Fluidrohr 13 ist über der Erdoberfläche 5 ein Verdichter 17 zugeordnet, welcher im vorliegenden Ausführungsbeispiel als eine Vorrichtung zum Einstellen des im Fluidrohr 13 herrschenden Fluiddrucks dient. Mittels des Verdichters 17 lassen sich Einpressdrücke flüssigen Fluids in das Fluidrohr 13 von 1,5 bis 20 bar realisieren.

Die Düsenöffnungen 15 sind im Hinblick auf die einstellbaren Drücke im Fluidrohr 13 so dimensioniert, dass sie als Unterschalldüsen für das Fluid fungieren. Zudem werden die Öffnungsquerschnitte der Düsenöffnungen 15 im vorliegenden Ausführungsbeispiel zum unteren Ende 3 der Erdwärmesonde 1 hin geringer. Dies ermöglicht es, in jeder Tiefe die gleiche Menge an Fluid in den Verdampfungsraum 9 einzuspritzen. Im Bereich der tiefer gelegenen Düsenöffnungen 15 herrschen aufgrund der Schwerkrafteinwirkung auf das Fluid höhere Fluiddrücke als im Bereich der höher gelegenen Düsenöffnungen 15. Bei gleichem Öffnungsquerschnitt der Düsenöffnungen würde dies dazu führen, dass im unteren Bereich mehr Fluid in den Verdampfungsraum 9 eingesprüht wird als im oberen Bereich des Verdampfungsraumes. Wenn nun die Öffnungsquerschnitte der Düsenöffnungen mit zunehmender Annäherung an das untere Ende 3 der Erdwärmesonde 1 geringer werden, kann erreicht werden, dass in jeder Tiefe dieselbe Menge an Fluid in den Verdampfungsraum 9 eingesprüht wird.

Der Fluiddruck, welcher mit dem Verdichter 17 im Fluidrohr 13 eingestellt wird, ist im Hinblick auf die Abmessungen der Düsenöffnungen 15 gewählt, dass eine Zerstäubung des flüssigen Wärmefluids beim Eintritt in den Verdampfungsraum 9 stattfindet. Er ist weiterhin so gewählt, dass ein so Anteil an flüssigem Fluid die Außenwand 19 des Verdampfungsraumes erreicht und diese benetzt. Dieser Anteil des Fluids läuft aufgrund der Schwerkrafteinwirkung an der Innenseite der Außenwand 19 nach unten. Dabei nimmt das Fluid Wärme aus dem umgebenden Erdreich 2 auf, was schließlich zu einem Verdampfen des Fluids führt. Derjenige Anteil des in den Verdampfungsraum 9 eingespritzten Fluids, der die Außenwand 19 nicht erreicht, verdampft bereits vorher. Je feiner die Zerstäubung des flüssigen Fluids beim Durchtritt durch die Düsenöffnungen 15 ist, oder je geringer der Druck ist, mit dem das Fluid beaufschlagt wird, desto höher ist der Anteil, der die Außenwand 19 nicht erreicht.

Das im Verdampfungsraum 9 verdampfte Fluid steigt als Dampf durch die Steigraum 11 zur Erdoberfläche auf. Über eine Entnahmeleitung 21, welche die Vorlaufleitung 21 eines über der Erde angeordneten Fluidkreislaufes darstellt, wird das verdampfte Wärmefluid aus dem Steigraum 11 abgeführt. Nachdem ihm im über der Erde befindlichen Kreislauf die Wärme entzogen worden ist, wird das Wärmefluid im Verdichter 17 verdichtet und über eine Rücklaufleitung 23 als flüssiges Fluid mit einem Einpressdruck im Bereich von 1,5 bar bis 20 bar in das Fluidrohr 13 eingeführt. Als über der Erde befindlicher Fluidkreislauf kann jeder Fluidkreislauf Verwendung finden, der es ermöglicht, dem verdampften Fluid Wärme zu entziehen.

Das Fluidrohr 13 wird über Streben 23 in seiner gegenüber dem Verdampfungsraum 9 und dem Steigraum 11 zentrierten Position fixiert. Dort, wo die Streben an die Außenwand 19 des Verdampfungsraumes 9 angrenzen, sind Temperatursensoren 25 angebracht. Diese ermöglichen es, die Temperatur der Außenwand 19 zu messen. Entspricht die Temperatur der Außenwand der Temperatur des umgebenden Erdreiches (bei einer Tiefe von 100 m oder mehr etwa 18 °C), so bedeutet dies, dass eine Benetzung der Außenwand durch das Fluid nicht gegeben ist. Liegt die von den Temperatursensoren gemessene Temperatur hingegen unter der Temperatur des umgebenden Erdreiches, so bedeutet dies, dass Fluid die Innenseite der Außenwand 19 benetzt. Da das Fluid an der Außenwand verdampfen soll, ist dieses nämlich kälter als die Außenwand. Zudem kühlt es beim Einspritzen in den Verdampfungsraum 9 weiter ab, so dass der Temperaturunterschied zwischen der benetzten und der unbenetzten Außenwand 19 leicht messbar ist.

Die Temperatursensoren ermöglichen außerdem den Aufbau eines Steuer- oder Regelkreises zum Steuern bzw. Regeln der erfindungsgemäßen Erdwärmesonde 1. So ist es beispielsweise möglich, durch Einstellen geeigneter Drücke mittels des Verdichters 17 die Außenwand 19 des Verdampfungsraumes 9 immer benetzt zu halten. Andererseits ist es auch möglich, den Druck in der Fluidleitung 13 so einzustellen, dass lediglich ein Teil der Außenwand des Verdampfungsraums 9 benetzt ist. Dies wird durch die Einstellbarkeit des Druckes im Fluidrohr 13 und die mit zunehmender Tiefe kleiner werdenden Öffnungsquerschnitte der Düsenöffnungen 15 möglich. Bei kleinerem Öffnungsquerschnitt kann nämlich bei geringeren Drücken schon ein Einsprühen des Fluids derart erfolgen, dass es die Außenwand 19 des Verdampfungsraumes erreicht. Wenn nun der Fluiddruck im Fluidrohr 13 so weit reduziert wird, dass dieser nicht mehr ausreicht, um bei den relativ großen Öffnungsquerschnitten im oberen Bereich des Verdampfungsraumes eine Benetzung der Außenwand herbeizuführen, so reicht dieser im unteren Bereich noch immer aus, um zu einer Benetzung zu führen. Die Ursache hierfür ist einerseits, dass im tieferen Bereich der Druck aufgrund der Schwerkrafteinwirkung weiter ansteigt und zum anderen, dass die Öffnungsquerschnitte der Düsenöffnungen geringer werden, wodurch sich die Sprühwirkung der Düsenöffnungen erhöht. Der Druck in dem Fluidrohr 13 lässt sich daher zwischen einer ersten Einstellung, in der die Außenwand 19 vollständig benetzt ist, und einer zweiten Einstellung, in der die Außenwand 19 überhaupt nicht benetzt ist, kontinuierlich variieren. Ausgehend von einem Druck, bei dem überhaupt keine Benetzung der Außenwand 19 vorliegt, erfolgt bei Erhöhung des Druckes zuerst eine Benetzung der am tiefsten gelegenen Abschnitte der Außenwand 19. Mit weiterer Erhöhung des Druckes wandert die Benetzung nach oben, so lange, bis ein Schwellendruck erreicht ist, der auch im Bereich der am höchsten gelegenen Düsenöffnungen 15 zu einer Benetzung der Außenwand 19 führt.

Wenn, wie im vorliegenden Ausführungsbeispiel, Temperatursensoren in Axialrichtung der Erdwärmesonde 1 im Verdampfungsraum 9 verteilt sind, lässt sich der Druck in der Fluidleitung 13 im Hinblick auf den Anteil an Außenwandfläche, der benetzt sein soll, sehr genau einstellen. Da mit zunehmender Benetzung auch mehr Fluid im Verdampfungsraum 9 verdampft, lässt sich über den Benetzungsgrad auch die Verdampfungsleistung und damit die Wärmeleistung der Erdwärmesonde steuern bzw. regeln.

Die Rücklaufleitung 22 des über der Erde befindlichen Wärmekreislaufs ist im vorliegenden Ausführungsbeispiel mit einem Ventil 27 ausgestattet. Mittels dieses Ventils 27 kann die Rücklaufleitung 22 gedrosselt und ggf. vollständig abgesperrt werden. Ebenso ist in der Vorlaufleitung 21 (Entnahmeleitung) ein Ventil 29 angeordnet, mit dem sich die Leitung drosseln bzw. vollständig absperren lässt.

Zwischen der Vorlaufleitung 21 und der Rücklaufleitung 22 befindet sich eine Verbindungsleitung 39, die ebenfalls mit einem Ventil 33 ausgestattet ist. Die Verbindungsleitung 31 und die Ventile 27, 29, 33 ermöglichen es, verdampftes Fluid, welches mit einem hohen Druck aus der Erdwärmesonde 1 aufsteigt, in die Fluidleitung 13 umzuleiten. Mittels dieser Umleitung kann der Druck im Fluidrohr 13 erhöht werden. Die Verbindungsleitung 31 dient daher zusätzlich oder alternativ zum Verdichter 17 als eine Vorrichtung zum Einstellen des in der Fluidleitung 13 herrschenden Fluiddrucks.

Wenn der Öffnungsquerschnitt des Ventils 33 in der Verbindungsleitung einstellbar ist, kann der Druckabfall über das Ventil 33 eingestellt werden, so dass eine Steuerung des Druckes, mit dem das Fluidrohr 13 beaufschlagt wird, möglich ist. Mittels der Verbindungsleitung 31 kann beispielsweise reagiert werden, wenn im Verdampfungsraum 9 nicht mehr der gewünschte Benetzungsgrad an der Außenwand 19 ermittelt wird. Dies führt zu einem Abfallen des Druckes im aufsteigenden Fluid und - als Konsequenz davon - zu einer Reduzierung der Leistung der Erdwärmesonde 1. Bis dieser Druckabfall die Erdoberfläche - und damit der über der Erdoberfläche befindliche Kreislauf - erreicht, vergeht jedoch eine Zeit, die lang genug ist, das Ventil 33 in der Verbindungsleitung 31 so weit zu öffnen, dass der Druck im Fluidrohr 13 so weit erhöht wird, dass der gewünschte Benetzungsgrad für die Außenwand 19 wieder hergestellt wird. Es lässt sich so ein Regelkreis aufbauen, der Schwankungen im Benetzungsgrad der Außenwand 19 minimiert.

Die beschriebenen Steuer- und Regelmöglichkeiten für die erfindungsgemäße Erdwärmesonde ermöglichen insbesondere einen gepulsten Betrieb der Erdwärmesonde, der auch selbstregulierend erfolgen kann. Nach dem ersten Einspritzen von Fluid in den Verdampfungsraum 9 mit einem vorgegebenen Fluiddruck im Fluidrohr 13 steigt aufgrund der Verdampfung des Fluids im Verdampfungsraum 9 der Druck an. Da sich dadurch der Druckunterschied zwischen dem Fluiddruck im Fluidrohr 13 und dem Dampfdruck im Verdampfungsraum 9 verringert, tritt weniger Fluid durch die Düsenöffnungen 15 in den Verdampfungsraum 9 ein. Dies führt dazu, dass weniger Fluid im Verdampfungsraum 9 zum Verdampfen zur Verfügung steht. Zudem kann der Druckunterschied so gering werden, dass der Benetzungsgrad der Außenwand 19 abnimmt, entweder weil weniger in den Verdampfungsraum eingesprühtes Wärmefluid die Außenwand 19 erreicht oder sogar überhaupt kein Wärmefluid die Außenwand 19 mehr erreicht. Auf diese Weise wird weniger verdampftes Wärmefluid gebildet, welches das über den Steigraum 11 aufsteigende Wärmefluid ersetzen kann, so dass der Druck im Verdampfungsraum 9 wieder sinkt. Das Druckgefälle zwischen dem Fluiddruck im Fluidrohr 13 und dem Dampfdruck im Verdampfungsraum 9 steigt wieder an, so dass wieder mehr Fluid in den Verdampfungsraum eingespritzt wird. Das Dampfdruckniveau an der Erdoberfläche 5 schwankt daher. Der Grad der Schwankung kann insbesondere durch Einstellen des Fluiddrucks im Fluidrohr 13 eingestellt werden. Falls ein pulsierender Betrieb nicht erwünscht ist, kann mittels eines Regelkreises der Druck im Fluidrohr 13 so geregelt werden, dass der Dampfdruck im Verdampfungsraum 9 weitgehend konstant gehalten wird.

## Patentansprüche

1. Von der Erdoberfläche aus in ein Bohrloch zu versenkende Erdwärmesonde (1) mit einem im Bereich der Erdoberfläche (5) anzuordnenden oberen Ende (7) und einem in das Bohrloch zu versenkenden unteren Ende (3), welche umfasst:
- einen Verdampfungsraum (9), welcher zumindest im Bereich des unteren Endes der Erdwärmesonde (1) vorhanden ist,
- wenigstens eine Fluidleitung (13), welche vom oberen Ende aus zugänglich ist, sich bis zum Verdampfungsraum (9) erstreckt und über wenigstens eine Fluidaustrittsöffnung (15) in den Verdampfungsraum (9) mündet, und
- wenigstens einen Steigraum (11), welcher vom Verdampfungsraum (9) ausgehend zum oberen Ende führt und einem über die wenigstens eine Fluidleitung (13) in den Verdampfungsraum (9) eingebrachten und dort verdampften Fluid den Aufstieg zum oberen Ende (7) ermöglicht,
**dadurch gekennzeichnet, dass**
- der Verdampfungsraum (9) die Fluidleitung (13) umgibt.

2. Erdwärmesonde (1) nach Anspruch 1, **dadurch gekennzeichnet, dass** der Steigraum (11) die Fluidleitung (13) umgibt.

3. Erdwärmesonde (1) nach Anspruch 1 oder 2, **dadurch gekennzeichnet, dass** der der Verdampfungsraum (9) und ggf. der Steigraum (11) die Fluidleitung (13) über ihren gesamten Umfang umgibt bzw. umgeben.

4. Erdwärmesonde (1) nach Anspruch 1, 2 oder 3, **dadurch gekennzeichnet, dass** die Fluidleitung (13) konzentrisch im Verdampfungsraum (9) und ggf. im Steigraum (11) angeordnet ist.

5. Erdwärmesonde (1) nach einem der vorangehenden Ansprüche, **dadurch gekennzeichnet, dass** die wenigstens eine Fluidaustrittsöffnung (15) in der Umfangswand der Fluidleitung (13) angeordnet ist.

6. Erdwärmesonde (1) nach Anspruch 5, **dadurch gekennzeichnet, dass** sich Fluidaustrittsöffnungen (15) in der Umfangswand des gesamten sich im Verdampfungsraum befindlichen Abschnitts der Fluidleitung (13) befinden.

7. Erdwärmesonde (1) nach Anspruch 5 oder 6, **dadurch gekennzeichnet, dass** die Öffnungsquerschnitte der Austrittsöffnungen (15) in Abhängigkeit von der Tiefe gewählt sind, in der sie sich nach dem Einbringen der Erdwärmesonde (1) in das Bohrloch befinden.

8. Erdwärmesonde (1) nach einem der Ansprüche 5 bis 7, **dadurch gekennzeichnet, dass** eine Vorrichtung (17, 31) zum Einstellen des in der Fluidleitung (13) herrschenden Fluiddruckes vorhanden ist.

9. Erdwärmesonde (1) nach Anspruch 8, **dadurch gekennzeichnet, dass** die Öffnungsquerschnitte der Fluidaustrittsöffnungen (15) im Hinblick auf die einstellbaren Fluiddrücke in der Fluidleitung (13) so gewählt sind, dass ein Einsprühen des Fluids in den Verdampfungsraum (9) durch Einstellen eines geeigneten Fluiddruckes möglich ist.

10. Erdwärmesonde (1) nach Anspruch 9, **dadurch gekennzeichnet, dass** die Öffnungsquerschnitte der Fluidaustrittsöffnungen (15) im Hinblick auf die einstellbaren Fluiddrücke in der Fluidleitung (13) so gewählt sind, dass ein Einsprühen des Fluids in den Verdampfungsraum (9) bis zur die Fluidleitung (13) umgebenden Außenwand (19) des Verdampfungsraumes (9) durch Einstellen eines geeigneten Fluiddruckes möglich ist.

11. Erdwärmesonde (1) nach einem der Ansprüche 8 bis 10, **dadurch gekennzeichnet, dass** die Vorrichtung zum Einstellen des in der Fluidleitung (13) herrschenden Fluiddruckes derart ausgestaltet ist, dass sie Fluiddrücke bis zu 20 bar ermöglicht.

12. Erdwärmesonde (1) nach einem der vorangehenden Ansprüche, **dadurch gekennzeichnet, dass** der Verdampfungsraum (9) eine Außenwand (19) mit daran angeordneten Temperaturfühlern (25) aufweist.

13. Erdwärmesonde (1) nach Anspruch 12, **dadurch gekennzeichnet, dass** Fluidaustrittsöffnungen (15) in Axialrichtung der Fluidleitung (13) verteilt sind und dass jeder Axialposition, in der wenigstens eine Fluidaustrittsöffnunge (15) vorhanden ist, wenigstens ein Temperaturfühler (25) zugeordnet ist.

14. Erdwärmesonde (1) nach Anspruch 13, **dadurch gekennzeichnet, dass** sich der wenigstens eine einer Axialposition zugeordnete Temperaturfühler (25) nach dem Einbringen der Erdwärmesonde (1) in das Bohrloch unterhalb dieser Axialposition befindet.

15. Erdwärmesonde (1) nach einem der vorangehenden Ansprüche, **dadurch gekennzeichnet, dass** zwischen der Fluidleitung (13) und der Außenwand (19) des Verdampfungsraumes (9) und ggf. des Steigraumes (11) Stützstreben (23) vorhanden sind und die Temperaturfühler (25) an den Stützstreben (23) fixiert sind.

16. Verfahren zum Betreiben einer Erdwärmesonde (1) mit
- einem im Bereich der Erdoberfläche (1) anzuordnenden oberen Ende (7),
- einem in das Bohrloch zu versenkenden unteren Ende (3), einem Verdampfungsraum (9), welcher zumindest im Bereich des unteren Endes (3) der Erdwärmesonde (1) vorhanden ist,
- wenigstens einer Fluidleitung (13), welche vom oberen Ende (7) aus zugänglich ist, sich bis zum Verdampfungsraum (9) erstreckt und über wenigstens eine Fluidaustrittsöffnung (15) in den Verdampfungsraum (9) mündet, und
- wenigstens einem Steigraum (11), welcher vom Verdampfungsraum (9) ausgehend zum oberen Ende (7) führt,
in welchem über die wenigstens eine Fluidleitung (13) ein Fluid in den Verdampfungsraum (9) eingebracht und dort verdampft wird, wobei der Steigraum (11) dem verdampften Fluid den Aufstieg zum oberen Ende (7) ermöglicht, und in welchem der Betrieb so erfolgt, dass der Druck im verdampften Fluid zwischen einem hohen Druckwert und einem niedrigen Druckwert pulsiert.
